## Europäisches Patentamt

## European Patent Office

## Office européen des brevets

(19)

(11) Veröffentlichungsnummer: **0 162 151**
**B1**

(12) **EUROPÄISCHE PATENTSCHRIFT**

(45) Veröffentlichungstag der Patentschrift:
24.05.89

(51) Int. Cl.⁴: **G 06 K 9/20**

(21) Anmeldenummer: **84116325.6**

(22) Anmeldetag: **27.12.84**

(54) Optisches Mehrzeilen-Lesegerät für die maschinelle Zeichenerkennung.

(30) Priorität: **29.03.84 DE 3411688**

(43) Veröffentlichungstag der Anmeldung:
**27.11.85 Patentblatt 85/48**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**US-A- 3 432 673**

**PATENTS ABSTRACTS OF JAPAN, Band 5, Nr. 185
(P-91)[857], 25. November 1981; & JP - A - 56 114 077**

(73) Patentinhaber: **Siemens Aktiengesellschaft Berlin und München, Wittelsbacherplatz 2, D-8000 München 2 (DE)**

(72) Erfinder: **Jost, Edgar, Ing. grad., Allingerstrasse 27, D-8039 Puchheim (DE)**

ACTORUM AG

## Beschreibung

Die Erfindung betrifft ein optisches Lesegerät gemäß dem Oberbegriff des Patentanspruchs 1.

Derartige optische Lesegeräte sind insbesondere als Handlesegerät allgemein bekannt und mit Erfolg zur Anwendung gelangt. So wird in der DE-PS 2 817 341 ein optisches Handlesegerät für eine maschinelle Zeichenerkennung beschrieben, das manuell relativ zu einer Zeichenzeile über einen Datenträger in beliebiger Richtung mit einer vorgegebenen maximalen Geschwindigkeit geführt wird.

Solche Geräte werden als periphere Datenerfassungsgeräte eingesetzt. Diese Art der Verwendung soll einerseits einen weiteren Anwendungsbereich z.B. zum Anschluß an Kassenterminals im Handel, zum Lesen von Etiketten oder an Bankenterminals zum Lesen von Kontonummern auf Kundenschecks, zum Abruf von Daten über ein Sichtgerät aus zentralen Dateien nach Lesen der Information auf einem Ausweis erschließen, bedeutet aber andererseits auch eine schwierigere Zeichenerkennung.

Derartige optische Handlesegeräte bestehen dabei im allgemeinen aus einer Abtasteinheit mit einer darin enthaltenen Fotodiodenmatrix und der eigentlichen der Abtasteinheit nachgeschalteten die Zeichenerkennung durchführenden Verarbeitungseinheit.

Eine typische Abtasteinheit mit einer zweidimensional aufgebauten Fotodiodenmatrix ist z.B. in der DE-OS 1 816 325 beschrieben. Typische Auswerteeinheiten sind aus der DE-PS 2 817 341 und der DE-PS 2 816 839 bekannt.

Auf Kassenetiketten und Verpackungen, z.B. auf der Pharmaindustrie ist es üblich, die Informationen über den Preis und den Inhalt in Klarschrift (OCR-Schrift) in zwei Zeilen anzuordnen.

Zum Lesen derartiger mehrzeiliger Informationen in Klarschrift ist es üblich, die bekannten Ein-Zeilen-Handlesegeräte zu verwenden und dabei den Lesekopf des Einzeilen-Handlesers nacheinander über die einzelnen Zeilen des Datenträgers zu führen.

Eine derartige Folgeabtastung erfordert nun relativ viel Zeit, insbesondere bei der Verwendung derartiger Handlesegeräte in Verbindung mit Kassettenterminals wird das Handling beeinträchtigt, da die Bedienperson den Lesekopf mehrfach über den Datenträger führen muß. Dies erfordert von der Bedienperson erhöhte Aufmerksamkeit und ist eine zusätzliche Fehlerquelle.

Aufgabe der Erfindung ist es, ein optisches Lesegerät der eingangs genannten Art so auszugestalten, daß bei einem Abtastvorgang mehrere Zeichenzeilen gleichzeitig erfaßt werden können. Das optische Lesegerät soll dabei einfach und kostengünstig ausgestaltet sein und eine schnelle Verarbeitung der abzutastenden Zeichen bewerkstelligen.

Diese Aufgabe wird bei einem optischen Lesegerät der eingangs genannten Art gemäß dem ersten Patentanspruch gelöst.

Weitere vorteilhafte Ausführungsformen der Erfindung sind in den Unteransprüchen gekennzeichnet.

Bei dem erfindungsgemäßen Lesegerät ist jeder zu erfassenden Druckzeile eine Auswerteeinheit zugeordnet, wobei die Auswerteeinheiten untereinander parallel geschaltete sind. Zwischen der Abtasteinheit und den Auswerteeinheiten befindet sich eine Bildweiche, die aus dem vom Sensorfeld, d.h. der Fotodiodenmatrix abgegebenen Gesamtsignalbild gleich große Einzelsignalbilder bildet und dann die Einzelsignalbilder getrennt den Auswerteeinheiten zuführt.

Zudem wird eine Fotodiodenmatrix und Auswerteeinheiten verwendet, die an sich zum Erfassen von nur einer Druckzeile vorgesehen sind. Dazu wird in der Bildweiche das von der Fotodiodenmatrix ausgehende Gesamtsignalbild in zwei Einzelbilder zerlegt und diese Einzelbilder virtuell soweit ergänzt, daß sich Einzelbilder in einer Dimensionierung ergeben, die dem Gesamtsignalbild entsprechen. Damit können diese virtuell vergrößerten Einzelsignalbilder von den bekannten Auswerteeinheiten verarbeitet werden, ohne daß diese besonders verändert werden müssen.

Gestaltet man die Aufteilung der Einzelsignalbilder hinsichtlich dem Gesamtsignalbild so, daß sich die Einzelsignalbilder im Bereich der Mitte des Gesamtsignalbildes überlappen, so wird das Lesegerät gegenüber Richtungsschwankungen beim Abtasten besonders unempfindlich.

Der «Fangbereich» für die einzelnen Zeilen des mehrzeiligen Datenträgers wird dadurch erweitert.

Bei einer vorteilhaften Ausführungsform der Erfindung enthält die Bildweiche eine Bildpunktzähleinrichtung mit gekoppelter Dekodiereinrichtung. Mit der Dekodiereinrichtung verknüpft ist eine logische Schaltungsanordnung mit zugehöriger Synchronisiereinrichtung. In Abhängigkeit vom Zählerstand der Bildpunktzähleinrichtung werden dabei die von der Abtasteinheit übernommenen Bildsignale des Sensorfeldes den Auswerteeinheiten zugeführt. Durch eine derartige Realisierung der Bildweiche wird das Handlesegerät besonders betriebssicher und störungsunanfällig.

Das Lesegerät kann sowohl als Handlesegerät mit manuell über den Datenträger geführter Abtasteinheit, als auch als maschineller Leser ausgebildet sein.

Ausführungsformen der Erfindung sind in den Zeichnungen dargestellt und werden im folgenden beispielsweise näher beschrieben. Es zeigen.

Fig. 1 ein Blockschaltbild eines optischen Zweizeilenhandlesegerätes,

Fig. 2 eine schematische Darstellung des aus dem Signalbild des Sensorfeldes gewonnenen Einzelsignalbildes für die Auswerteeinheiten eines Zweizeilenhandlesegerätes,

Fig. 3 eine schematische Darstellung der Generierung der Einzelsignalbilder aus dem Signalbild des Sensorfeldes für ein Zweizeilenhandlesegerät bei dem sich die Einzelsignalbilder im mittleren Bereich des Sensorfeldes überlappen,

Fig. 4 eine schematische Darstellung der Bildrasterzeugung bei einem Zweizeilenhandlesegerät entsprechend der Fig. 2 und

Fig. 5 ein Blockschaltbild der Bildweiche.

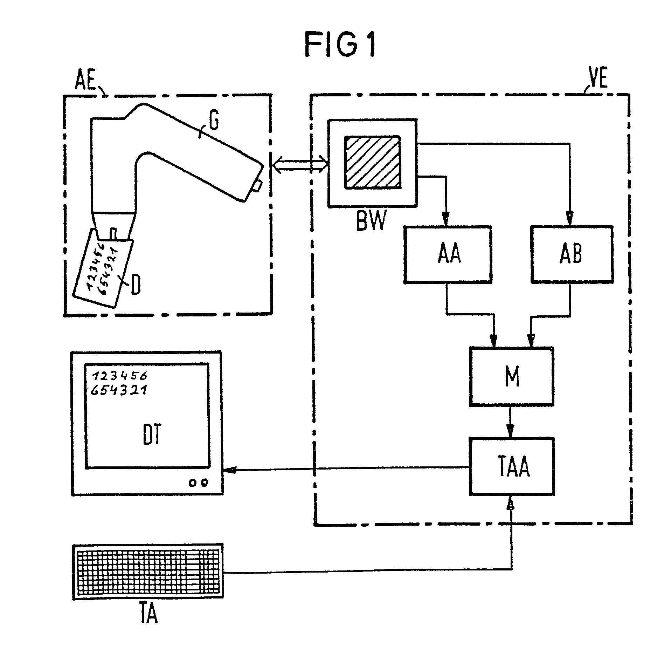

Ein optisches Zweizeilen-Handlesegerät für die maschinelle Zeichenerkennung von sogenannter OCR-Klarschrift besteht gemäß der Darstellung der Fig. 1 aus einer Abtasteinheit AE die in bekannter Weise in einem pistolenartigen Gehäuse G untergebracht ist und die eine Lichtquelle zum Beleuchten und ein Sensorfeld aus einer Fotodiodenmatrix zum Abtasten eines Abtastfensters eines Datenträgers enthält. Die Abtasteinheit wird dabei von Hand über einen mit OCR-Schriftzeichen versehenen Datenträger D geführt, wobei dann die im Gehäuse G untergebrachte Fotodiodenmatrix entsprechend den Schriftzeichen Bildsignale sogenannte Videosignale, erzeugt. Diese Videosignale werden an in einer Verarbeitungseinheit VE entsprechend aufbereitet und analysiert und dann auf externen Datenterminals DT die z.B. Datensichtgeräte, Drucker oder ähnliches sein können, dargestellt. Eine mit der Verarbeitungseinheit VE verknüpfte Tastatur TA dient z.B. zur Inbetriebnahme des Gerätes und zur Auswahl der die erkannten Zeichen speichernden Dateien. Die Verarbeitungseinheit VE enthält eine elektronische Bildweiche BW, die wie nachfolgend ausführlicher beschrieben das von der Fotodiodenmatrix FM der Abtasteinheit gelieferte Gesamtsignalbild für zwei Druckzeilen in zwei Einzelsignalbilder für je eine Druckzeile zerlegt und diese Einzelsignalbilder Auswerteeinheiten AA und AB zuführt. Die Auswerteeinheiten AA und AB entsprechen in ihrem Aufbau den bekannten Auswerteeinheiten für Einzeilenhandlesegeräte (DE-PS 2 817 341, DE-PS 2 816 839).

Eine den Auswerteeinheiten AA und AB nachgeschaltete Multiplexeinheit M ruft die in den Auswerteeinheiten AA und AB aufbereiteten und erkannten Bilder aus diesen Auswerteeinheiten ab und führt sie über eine Tastaturanpassungsschaltung TAA dem Datenterminal DT zur Darstellung zu. Bei der Multiplexeinheit M handelt es sich um eine nach der bekannten Art aufgebaute Multiplexeinheit. Die Tastaturanpassungseinheit TAA ist aus Einzeilenhandlesegeräten bekannt.

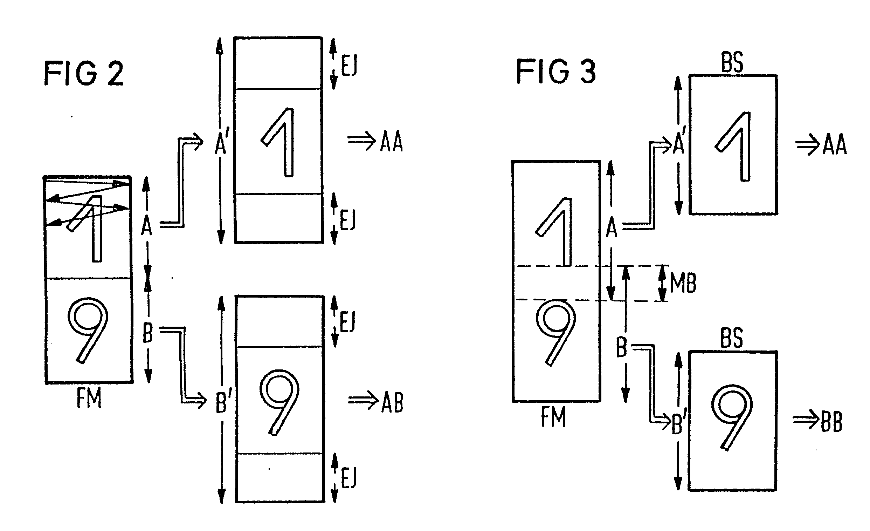

Entsprechend der Darstellung der Fig. 2 enthält das optische Zweizeilenhandlesegerät eine in der Fig. 2 nur schematisch dargestellte Fotodiodenmatrix FM aus 16 × 64 Fotodioden die 1024 einzelnen Bildpunkten des Signalbildes entsprechen. Ein im Gehäuse der Abtasteinheit angeordnetes optisches System projiziert dabei das Bild der abzulesenden Druckzeilen mit ihren Druckzeichen, in diesem Falle die Zeichen 1 und 9, auf die Fotodiodenmatrix FM, die entsprechend der dargestellten Pfeilrichtung, beginnend von links oben nach rechts unten, hinsichtlich ihrer Bildinformation abgefragt wird. Dabei wird dem Signalpegel 0 des resultierenden Videosignales die Bildinformation «weiß» und dem Pegel 1 die Bildinformation «schwarz» zugeordnet.

Die Bildweiche BW bildet nun aus dem Gesamtsignal der Fotodiodenmatrix FM, die Information für zwei Zeilen enthält, zwei Einzelsignalbilder A' und B' und führt diese Einzelsignalbilder A' und B' jeweils getrennt den Auswerteeinheiten AA und AB zu. Da diese Auswerteeinheiten für eine Fotodiodenmatrix entsprechend der Größe der Fotodiodenmatrix FM ausgelegt sind, werden die Signalbilder A und B der oberen und unteren Hälfte der Fotodiodenmatrix FM virtuell durch die Informationen EI ergänzt, so daß sich Einzelsignalbilder A' und B' ergeben, die hinsichtlich ihrer Dimensionierung dem ursprünglichen Gesamtsignalbild entsprechen. Diese virtuellen Einzelsignalbilder A' und B' werden dann den entsprechenden Auswerteeinheiten AA und AB zugeführt.

Verwendet man nun anstelle der Fotodiodenmatrix FM mit 64 Zeilen eine Fotodiodenmatrix FM entsprechend der Fig. 3 mit 100 Zeilen so läßt sich das Gesamtsignalbild dieser Fotodiodenmatrix FM ebenfalls in zwei Einzelsignalbilder AB aufteilen, die sich aber im mittleren Bereich des Gesamtsignalbildes überlappen. Dadurch entsteht für diesen mittleren Bereich eine Redundanz der Bildinformation. Derartige Redundanz hat den Vorteil, daß das Handlesegerät nur ungenau über die Druckzeilen des Datenträgers geführt werden muß und daß es trotzdem zu keinen Störungen bei der Erkennung kommt.

Bei der dargestellten Ausführungsform entsprechend der Fig. 3 werden nun die sich überlappenden Einzelsignalbilder A und B entsprechend großen Bildspeichern BS zugeführt. Um auch bei einer derartigen Ausführungsform die bekannten Auswerteeinheiten mitverwenden zu können, können diese Bildspeicher z.B. die Größe von 1024 Speicherpunkten entsprechend der Größe der ursprünglichen Fotodiodenmatrix FM der Fig. 2 haben. Auch hier lassen sich über die Bildweiche die Informationen der oberen und unteren Teilbilder A und B des Gesamtsignalbildes der Fotodiodenmatrix FM vituell bedarfsweise auf die Größe der Bildspeicher A' und B' ergänzen. Die Auswerteeinheiten AA und AB rufen dann die virtuellen Einzelsignalbilder A' und B' aus den entsprechenden Bildspeichern BS ab.

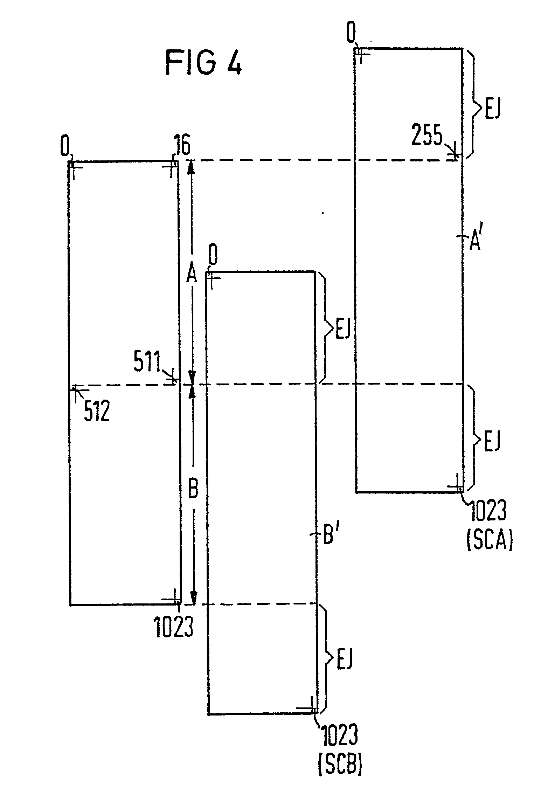

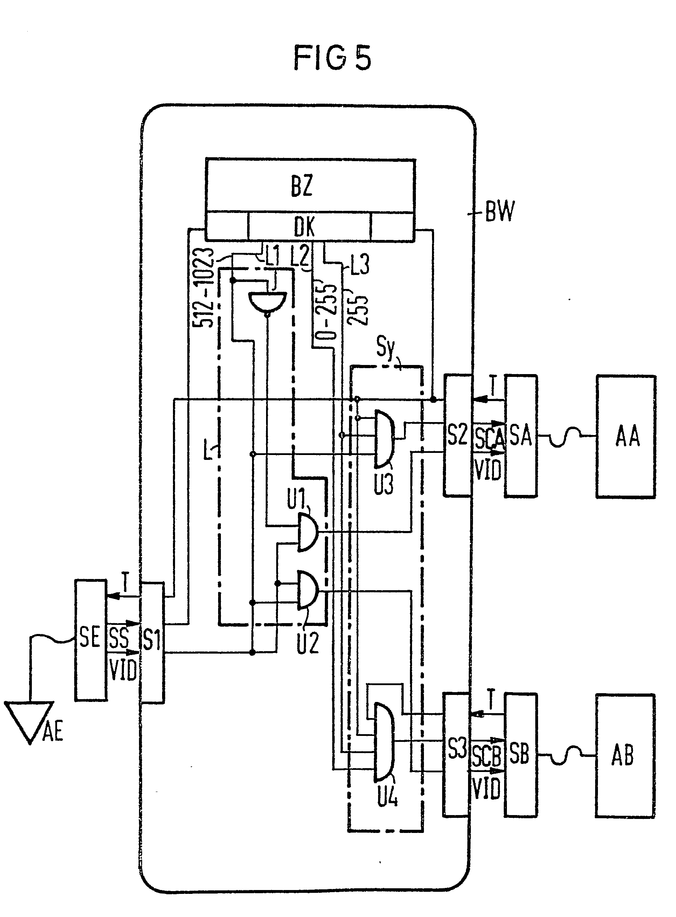

Der Aufbau und die Funktion der Bildweiche BW wird nun anhand der Fig. 4 und 5 näher beschrieben. Dabei wird bei Bildrastererzeugung in der Fig. 4 von dem in der Fig. 2 beschriebenen Prinzip Gebrauch gemacht.

Die Bildweiche BW ist dabei als selbständige Baueinheit ausgestaltet und kann über entsprechende Steckerelemente S1, S2, S3 mit entsprechenden Steckerelementen SE, SA und SB der Abtasteinheit und den Auswerteeinheiten AA und AB verbunden werden. Dadurch ergibt sich die einfache Möglichkeit aus geschlossenen Baugruppen sowohl Einzeilen- als auch Mehrzeilen-Handlesegeräte aufzubauen. Beim Aufbauen eines Einzeilen-Handlesegerätes wird unter Weglassung der Bildweiche BW, der Stecker SA der Auswerteeinheit AA direkt mit dem Stecker SE der Abtasteinheit AE verbunden.

Die Auswerteeinheiten AA und AB enthalten nun in bekannter Weise hier nicht dargestellte Taktgeneratoren. Sie erzeugen Steuertakte T zum Ansteuern eines Bildpunktzählers BZ in der Bildweiche BW und zur Steuerung des Abtasters in der Abtasteinheit AE. Beide Taktgeneratoren laufen kontinuierlich, bedingt jedoch z. B. durch eine Netzkoppelung, synchron. Im Takt des von der Auswerteeinheit AA ausgehenden Taktes T wird das Sensorfeld (Fotodiodenmatrix) FM entsprechend der Fig. 4 abgefragt und zwar beginnend links oben am Bildpunkt 0 bis rechts unten zum Bildpunkt 1023. Es werden also 1024 Punkte abgefragt. Das so gewonnene Videosignal VID wird der Bildweiche BW über die Stecker S1 zugeführt.

Die Bildweiche enthält einen Bildpunktzähler BZ mit nachgeschalteter Dekodiereinrichtung DK. Mit der Dekodiereinrichtung DK verbunden, ist eine logische Schaltungsanordnung L und eine Synchronisiereinrichtung SY. Dabei werden in Abhängigkeit vom Zählerstand der Bildpunktzähleinrichtung BZ, die von der Abtasteinheit AE eingehenden Bildsignale VID den Auswerteeinheiten AA oder AB zugeführt. Die Dekodiereinrichtung setzt dabei die entsprechenden Zählerstände (0 bis 1023) des Bildpunktzählers in entsprechende Ansteuersignale für die nachfolgende Logik um.

Die Dekodiereinrichtung hat dabei drei Ausgänge L1 und L2 und L3. Über die Leitung L1 gibt der Decodierer dann Ansteuersignale ab, wenn die Bildpunkte 512 bis 1023 (untere Bildhälfte) der Fotodiodenmatrix FM abgefragt wird. Die Leitung L2 wird mit Signalen beaufschlagt, für die Bereiche der Bildpunkte 0 bis 255 der Fotodiodenmatrix FM und die Leitung L3 für den Bildpunkt 255.

Der Bildpunktzähler BZ ist eingangsseitig mit dem Takt T verknüpft und zählt in Abhängigkeit von diesem Takt entsprechend der Abfragung des Fotodiodenmatrix FM von 0 bis 1023. Rückgesetzt, d.h. synchronisiert wird der Bildzähler über das Synchronisiersignal SS das generiert wird, wenn der letzte Punkt 1023 der Fotodiodenmatrix FM erreicht ist.

Der Dekodierer steuert über die logische Schaltungsanordnung L aus den beiden UND-Gliedern U1 und U2 und dem Inverter I die Verteilung der Videosignale VID zu den Auswerteeinheiten AA und AB, wobei der Auswerteeinheit AA die Bildpunkte 0 bis 511 und der Auswerteeinheit AB die Bildpunkte 512 bis einschließlich 1023 zugeführt werden.

Da die Halbbilder jedoch nur 512 Bildpunkte enthalten, die Auswerteeinheiten aber für 1024 Bildpunkte ausgelegt sind, ist es erforderlich, ein sogenanntes virtuelles Bild von 1024 Bildpunkten zu erzeugen. Zu dieser virtuellen Bilderzeugung wird das tatsächliche physikalische Halbbild durch einen Vor- und Nachlauf von je 256 Bildpunkten ergänzt und zwar dadurch, daß man während der Abtastung des unteren Halbbildes B und der dabei erfolgten Zuführung der Videosignale zur Auswerteeinheit AB, die in der Auswerteeinheit AA während dieser Zeit tatsächlich nicht eingehenden Videosignale als «Weißwerte» beinhaltende Videosignale wertet. Dadurch werden in den entsprechenden Auswerteelektroniken AA und AB jeweils 1024 Bildpunkte umfassender Bilder aufgebaut, die nur im Mittelteil die Informationen von der Fotodiodenmatrix FM enthalten. Der Vorlauf und der Nachlauf von je 256 Bildpunkten ist «weiß», da das Signal VID in der Weiche in diesen Bildphasen gesperrt ist. Die Sperre wird dadurch erreicht, daß über das UND-Glied U1 in Verbindung mit dem Inverter I das Videosignal VID für die obere Hälfte der Fotodiodenmatrix der Auswertelektronik AA, und für den unteren Teil der Fotodiodenmatrix FM über das UND-Glied U2 der Auswerteeinheit AB zugeführt wird.

Der erforderliche Nachlauf und Vorlauf von 256 Bildpunkten für die virtuellen Bilder A' und B' wird über die Synchronisiereinrichtung SY erzeugt.

Sie bildet dann ein das virtuelle Bild A' in die Auswerteeinheit übernehmendes und damit das Ende eines Abtastbildes anzeigendes Synchronisiersignal SCA beim Bildpunkt 1023 des virtuellen Bildes A', wenn an dem UND-Glied U3 bei laufendem Taktgenerator T der 255 Bildpunkt (L3) in der zweiten Hälfte (Bildpunkte 512 bis 1023) der Fotodiodenmatrix FM (L1) erreicht ist.

Das Synchronisiersignal SCB, für das Ende des virtuellen Bildes B', wird über das UND Glied U4 generiert und zwar bei laufendem Taktgenerator T (die Taktgeneratoren für AA und AB laufen synchron) und wenn die Abtastung im Bereich der Bildpunkte o bis 255 (L2) erfolgt und der 255 Bildpunkt (L3) erreicht ist.

Die Erfindung wurde vorstehend anhand eines Zweizeilen-Handlesegerätes beschrieben. Wird eine gleichzeitige Abtastung von mehreren Druckzeilen gewünscht, so läßt sich dies durch entsprechende Ergänzung der Bildweiche leicht bewerkstelligen.

Das Lesegerät kann dabei sowohl als Handlesegerät mit manuell über den Datenträger geführten Druckzeilen ausgebildet sein, als auch als ein maschinelles Lesegerät bei dem der Abtaster maschineller relativ um Datenträger bewegt wird.

Bezugszeichenliste

| | |
|---|---|
| AE | Abtasteinheit |
| G | Gehäuse |
| D | Datenträger |
| VE | Verarbeitungseinheit |
| DT | Datenterminal |
| TA | Tastatur |
| BW | Bildweiche |
| FM | Fotodiodenmatrix |
| AA | Auswerteeinheiten |
| AB | Auswerteeinheiten |
| M | Multiplexeinheit |
| TAA | Tastaturanpassungseinheit |
| A'. B' | Einzelsignalbilder (erweiterte) |
| A, B | Halbbilder (Signalbilder) |
| MB | mittlerer Bereich |
| EJ | ergänzte Information |
| BS | Bildspeicher |
| S1, S2, S3 | Steckerelemente |
| SE, SA, SB | Steckerelemente |
| T | Steuertakt |
| BZ | Bildpunktzähler |
| VID | Videosignal |
| DK | Dekodiereinrichtung |
| L | logische Schaltungsanordnung |

SY            Synchronisiereinrichtung
L1, L2, L3      Ausgänge, Dekodierer
SS            Synchronisiersignal
U1, U2, U3, U4   UND-Glieder
I              Inverter
SCA, SCB      Synchronisiersignale
0–1023        Bildpunkte

## Patentansprüche

1. Optisches Lesegerät für die maschinelle Zeichenerkennung mit einer längs einer Druckzeile über einen abzutastenden Datenträger (D) geführten Abtasteinheit (AE), die eine Lichtquelle zum Beleuchten und ein aus einer Fotodiodenmatrix (FM) bestehendes Sensorfeld zum Abtasten eines Abtastfensters des Datenträgers (D) enthält und mit wenigstens einer der Abtasteinheit (AE) zugeordneten Auswerteeinheit (AA, AB), dadurch gekennzeichnet, daß zum gleichzeitigen Erfassen zweier parallel verlaufender Druckzeilen pro Druckzeile je eine Auswerteeinheit (AA, AB) vorgesehen ist, daß die beiden Auswerteeinheiten (AA, AB) untereinander parallelgeschaltet sind und über eine gemeinsame Bildweiche (BW) mit der Abtasteinheit (AE) in Verbindung stehen, daß die Fotodiodenmatrix (FM) der Abtasteinheit (AE) und die beiden Auswerteeinheiten (AA, AB) jeweils zum Erfassen von nur einer Druckzeile vorgesehen sind und daß die Bildweiche (BW) derart gestaltet ist, daß das von der Fotodiodenmatrix (FM) ausgehende Gesamtbildsignal (A + B) in zwei Einzelbilder (A, B) zerlegt wird und diese Einzelbilder (A, B) virtuell zu in ihrer Dimensionierung dem Gesamtbildsignal entsprechenden Einzelsignalbildern (A', B') ergänzt werden.

2. Optisches Lesegerät nach dem Anspruch 1, dadurch gekennzeichnet, daß die Einzelsignalbilder (A, B) hinsichtlich dem mittleren Bereich (MB) des Gesamtsignalbildes überlappend (redundant) ausgebildet sind.

3. Optisches Lesegerät nach Anspruch 1 oder 2, dadurch gekennzeichnet, daß die Einzelsignalbilder (A, B) vor der Zuführung zu den Auswerteeinrichtungen (AA, AB) zwischenspeichernden Bildspeichern (BS) zugeführt werden.

4. Optisches Lesegerät nach einem der Ansprüche 1 bis 3, dadurch gekennzeichnet, daß die Bildweiche (BW) eine Bildpunktzähleinrichtung (BZ) mit Dekodiereinrichtung (DK) aufweist, und daß eine mit der Dekodiereinrichtung (DK) verknüpfte logische Schaltungsanordnung (L) mit zugeordneter Synchronisiereinrichtung (SY) vorgesehen ist, die in Abhängigkeit vom Zählerstand der Bildpunktzähleinrichtung (BZ) die von der Abtasteinheit (AE) übernommenen Bildsignale des Sensorfeldes (FM) den Auswerteeinheiten (AA, AB) zuführt.

5. Optisches Lesegerät nach einem der Ansprüche 1 bis 4, dadurch gekennzeichnet, daß den Auswerteeinheiten (AA, AB) eine gemeinsame, mit einer Ausgabeeinheit (DT, TAA) verknüpfte Multiplexeinheit (M) zugeordnet ist.

6. Optisches Lesegerät nach einem der Ansprüche 1 bis 5, dadurch gekennzeichnet, daß die Bildweiche (BW) als selbständig anschließbare Baueinheit ausgebildet ist.

7. Optisches Lesegerät nach einem der Ansprüche 1 bis 6, dadurch gekennzeichnet, daß das Lesegerät als optisches Handlesegerät ausgebildet ist, bei der die Abtasteinheit (AE) manuell über den Datenträger (D) bewegt wird.

8. Optisches Lesegerät nach einem der Ansprüche 1 bis 7, dadurch gekennzeichnet, daß das Lesegerät als maschinelles Lesegerät ausgebildet ist, bei der die Abtasteinheit (AE) und der Datenträger (D) maschinell relativ zueinander bewegt werden.

## Claims

1. Optical reading device for automatic character recognition, having a scanning unit (AE), which is guided over a data carrier (D) to be scanned, along a print line, and includes a light source for the illuminating and a sensor field, consisting of a photodiode matrix (FM), for the scanning of a scanning window of the data carrier (D), and having at least one evaluation unit (AA, AB), assigned to the scanning unit (AE), characterized in that, for the simultaneous acquisition of two parallel-running print lines, one evaluation unit each (AA, AB) is provided per print line, in that the two evaluation units (AA, AB) are connected in parallel to each other and are in connection via a common image separating filter (BW), with the scanning unit (AE), in that the photodiode matrix (FM) of the scanning unit (AE) and the two evaluation units (AA, AB) are provided in each case for the acquisition of only one print line and in that the image separating filter (BW) is designed in such a way that the complete image signal (A + B) leaving the photodiode matrix (FM) is split into two individual images (A, B) and these individual images (A, B) are supplemented virtually to form individual signal images (A', B'), corresponding in their dimensioning to the complete image signal.

2. Optical reading device according to Claim 1, characterized in that the individual signal images (A, B) are formed as overlapping (redundant) with regard to the middle region (MB) of the complete signal image.

3. Optical reading device according to Claim 1 or Claim 2, characterized in that, before feeding to the evaluation units (AA, AB), the individual signal images (A, B) are fed to buffer-storing image memories (BS).

4. Optical reading device according to one of Claims 1 to 3, characterized in that the image separating filter (BW) has an image dot counting device (BZ) with decoder device (DK), and in that a logical circuit arrangement (L), linked to the decoder device (DK), is provided with an assigned synchronizing device (SY), which feeds the image signals in the sensor field (FM), accepted from the scanning unit (AE), to the evaluation units (AA, AB) in dependence on the counter reading of the image dot counting device (BZ).

5. Optical reading device according to one of Claims 1 to 4, characterized in that the evaluation units (AA, AB) are assigned a common multiplex unit (M), linked to an output unit (DT, TAA).

6. Optical reading device according to one of Claims 1 to 5, characterized in that the image separating filter (BW) is designed as an independently connectable component.

7. Optical reading device according to one of Claims 1 to 6, characterized in that the reading device is designed as an optical manual reading device, in which the scanning unit (AE) is moved manually over the data carrier (D).

8. Optical reading device according to one of Claims 1 to 7, characterized in that the reading device is designed as an automatic reading device, in which the scanning unit (AE) and the data carrier (D) are moved automatically relative to each other.

**Revendications**

1. Appareil de lecture optique pour la reconnaissance automatique de caractères, comprenant une unité d'exploration (AE) guidée le long d'une ligne imprimée au-dessus d'un support de données (D) à explorer, qui contient une source lumineuse pour l'éclairage et une plage de détection constituée par une matrice de photodiodes (FM) pour explorer une fenêtre d'exploration du support de données (D), ainsi qu'au moins une unité d'exploitation (AA, AB) coordonnée à l'unité d'exploration (AE), caractérisé en ce que, pour la saisie simultanée de deux lignes imprimées s'étendant parallèlement, il comporte une unité d'exploitation (AA, AB) pour chaque ligne imprimée, que les deux unités d'exploitation (AA, AB) sont connectées en parallèle entre elles et sont en liaison avec l'unité d'exploration (AE) à travers un aiguillage d'images (BW) commun, que la matrice de photodiodes (FM) de l'unité d'exploration (AE) et les deux unités d'exploitation (AA, AB) sont prévues chacune pour la saisie de seulement une ligne imprimée et que l'aiguillage d'images (W) est réalisé de manière que l'image-signal globale (A+B) soit décomposée en deux images individuelles (A, B) et que ces images individuelles (A, B) sont complétées virtuellement en images-signal individuelles (A', B') dont les dimensions correspondent à l'image-signal globale.

2. Appareil selon la revendication 1, caractérisé en ce que les images-signal individuelles (A, B) sont réalisées à recouvrement (avec redondance) quant à la zone médiane (MB) de l'image-signal globale.

3. Appareil selon la revendication 1 ou 2, caractérisé en ce que les mémoires d'image (BS) sont prévues pour la mémorisation intermédiaire des images-signal individuelles (A, B) avant l'application de celles-ci au dispositif d'exploitation (AA, AB).

4. Appareil selon une des revendications 1 à 3, caractérisé en ce que l'aiguillage d'images (BW) comporte un dispositif de comptage de points d'image (BZ) avec un décodeur (DK) et qu'un circuit logique (L) a été prévu, circuit qui est relié au décodeur (DK) et auquel est coordonné un dispositif de synchronisation (SY), pour appliquer les signaux d'image de la plage de détection (FM), repris de l'unité d'exploration (AE), aux unités d'exploitation (AA, AB) en fonction de la position du dispositif de comptage de points d'image (BZ).

5. Appareil selon une des revendications 1 à 4, caractérisé en ce qu'une unité de multiplexage (M) commune, reliée à une unité de sortie (DT, TAA), est coordonnée aux unités d'exploitation (AA, AB).

6. Appareil selon une des revendications 1 à 5, caractérisé en ce que l'aiguillage d'images (BW) est réalisé comme une unité pouvant être branchée de façon autonome.

7. Appareil selon une des revendications 1 à 6, caractérisé en ce qu'il est réalisé comme un lecteur optique portatif dont l'unité d'exploration (AE) est déplacée manuellement au-dessus du support de données (D).

8. Appareil selon une des revendications 1 à 7, caractérisé en ce qu'il est réalisé comme un lecteur automatique dans une disposition où l'unité d'exploration (AE) et le support de données (D) sont animés d'un mouvement relatif par une machine.

# FIG 1

FIG 2

FIG 3

EP 0 162 151 B1

# FIG 4

# FIG 5